**Europäisches Patentamt**

**European Patent Office**

**Office européen des brevets**

(19)

(11) Veröffentlichungsnummer: **0 183 243**
**B1**

(12)

# EUROPÄISCHE PATENTSCHRIFT

(45) Veröffentlichungstag der Patentschrift:
**14.09.88**

(21) Anmeldenummer: **85115052.4**

(22) Anmeldetag: **27.11.85**

(51) Int. Cl.⁴: **B 21 D 53/30**, C 22 F 1/04,
**B 60 B 21/02**

(54) **Verfahren zum Ausrichten von Felgen.**

(30) Priorität: **27.11.84 DE 3443207**

(43) Veröffentlichungstag der Anmeldung:
**04.06.86 Patentblatt 86/23**

(45) Bekanntmachung des Hinweises auf die Patenterteilung:
**14.09.88 Patentblatt 88/37**

(84) Benannte Vertragsstaaten:
**BE DE FR GB IT SE**

(56) Entgegenhaltungen:
**EP - A - 0 096 399**
**GB - A - 1 484 511**
**US - A - 3 172 787**
**US - A - 4 105 255**

(73) Patentinhaber: **Ardal og Sunndal Verk a.s.,**
**Sörkedalsveien 6, Oslo 3 (NO)**

(72) Erfinder: **Berg, Otto, Undelstadvn. 84C, N-1370 Asker**
**(NO)**

(74) Vertreter: **Patentanwälte Zellentin,**
**Zweibrückenstrasse 15, D-8000 München 2 (DE)**

**Beschreibung**

Die Erfindung betrifft ein Verfahren zum Ausrichten der Felge eines Aluminiumrades, welche aus härtbarem Aluminiumblech hergestellt ist, mit Hilfe eines oder mehrerer Formgeber.

Fahrzeugräder für Luftreifen werden hauptsächlich aus Stahl und in der Form einer zusammengesetzten Einheit, bestehend aus einer Radscheibe und einer Felge, hergestellt. Das Fahrzeugrad hat dabei bestimmten Bedingungen im Hinblick auf den Durchmesser der Felge, Umfang, Breite, Tiefe und Geradheit zu entsprechen. Nachdem die Felge durch Walzen hergestellt ist, wird sie auf die Radscheibe aufgezogen. Dieses geschieht üblicherweise mit Hilfe einer Spreizform oder alternativ zunächst mit einer Spreizform, welche die Felge weiter als die erforderten Abmessungen spreizt, und dann durch Druckverformung, bei welcher die Felge auf die Radscheibe gepresst wird.

Für Räder, welche aus einem Stück hergestellt werden, z. B. gegossene oder geschmiedete Aluminiumräder, ist diese Methode weniger geeignet, insbesondere weil diese Räder im Hinblick auf die Rundheit, verglichen mit herkömmlichen Stahlrädern, bereits mit geringeren Toleranzen hergetellt werden. Die Felgen von gegossenen oder geschmiedeten Aluminiumrädern werden deshalb häufig spanabhebend nachgearbeitet, um die engeren Toleranzen einzuhalten.

Bei der Herstellung von einstückigen Aluminiumrädern durch Drücken ist es wünschenswert, die Felge so zu erhalten, wie sie gedrückt wurde, d. h. ohne spanabhebende Nachbearbeitung. Hierfür sind einerseits Kostengründe massgebend, andererseits sprechen hierfür auch die vorteilhaften Eigenschaften des Metalls an der durch Drücken entstandenen Oberfläche. Drücken ergibt eine sehr gleichmässige Verteilung des Werkstoffes in der Felge und eine ausserordentliche Rundheit, welche eine geringe Unwucht bedeutet. Eine anschliessende Wärmebehandlung, etwa in Form eines Lösungsglühens zur Homogenisierung des Werkstoffgefüges, kann jedoch die massrichtige Form verändern, weshalb es nötig ist, das Rad erst nach dem Lösungsglühen auszurichten. Ein derartiges Verfahren ist im Zusammenhang mit Felgen, die eine Schweissnaht aufweisen, durch die US-PS 3 172 787 bekannt geworden.

Der dem Ausrichten der Felge vorangehende Verfahrensschritt des Lösungsglühens kann erfindungsgemäss so zum Ausrichten der Felge herangezogen werden, dass das Rad zum Schrumpfen über einen Formgeber gebracht wird, während es von der Lösungsglühtemperatur heruntergekühlt wird. Hierdurch erhält man eine gleichmässige Deformation in der Felge. Die Felge nimmt dabei den Durchmesser und die Form des Formgebers innerhalb sehr enger Toleranzen an.

Da die Felge auf den Formgeber aufschrumpft, ist eine erhebliche Kraft erforderlich, um das Rad von dem Formgeber zu entfernen. Eine bekannte und gebräuchliche Lösung dieses Problems besteht darin, dass solche Formgeber aus Segmenten aufgebaut sind, welche in radialer Richtung bewegt werden können, um das Werkstück freizugeben.

Derartige Formgeber sind jedoch aufwendig und umständlich in der Handhabung. Aufgabe der vorliegenden Erfindung ist es, ein einfaches Verfahren zur Ausrichtung von Fahrzeugrädern anzugeben, bei welchem die oben genannten Nachteile nicht auftreten.

Das erfindungsgemässe Verfahren mit den kennzeichnenden Merkmalen des Patentanspruchs hat den Vorteil, dass einfache Formgeber verwendet werden können.

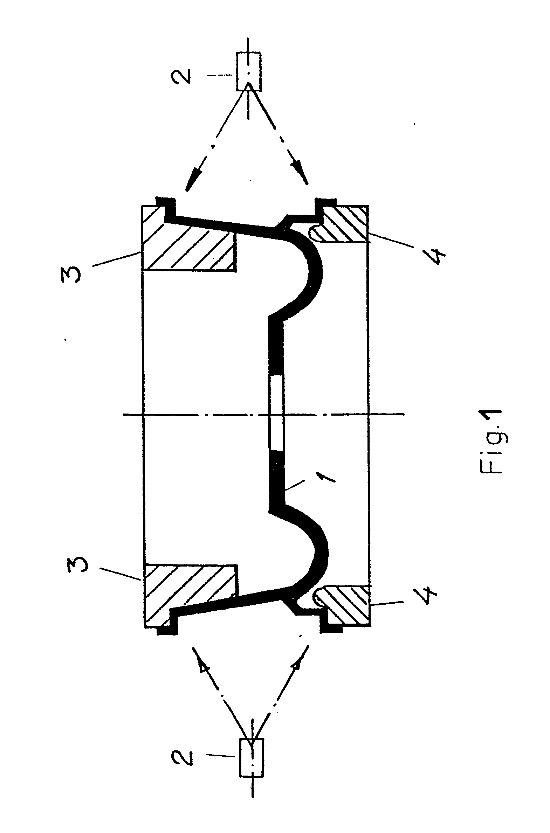

Ein Ausführungsbeispiel der Erfindung ist anhand der Figur näher erläutert. Mit 1 ist das Werkstück, also das Rad, bezeichnet. Mit Hilfe der Düse 2 wird ein Kühlmittel versprüht, welches normalerweise Wasser ist. Die entsprechenden Teile des Formgebers sind mit 3 und 4 bezeichnet.

Derartige Räder 1 werden durch Drücken aus Blech aus einer härtbaren Aluminiumlegierung hergestellt mit einer Grösse, welche wenig unter dem endgültigen Durchmesser liegt. Nach der Beendigung des Lösungsglühens werden sie bei etwa gleicher Temperatur auf die geheizten Formgeber 3 und 4 gebracht, wo sie durch ein Kühlmittel auf eine bestimmte Temperatur unterhalb derjenigen der Formgeber 3 bzw. 4 gebracht werden. Dabei schrumpft die Felge des Rades 1 fest auf die Formgeber 3 und 4 auf.

Das Rad 1 kann beispielsweise die Grösse 5 1/2" J X 15" haben und bei einer Temperatur von 500 °C bis 550 °C lösungsgeglüht werden. Eine Vorheiztemperatur des Formgebers von 100 °C hat sich in der Praxis gut bewährt. Durch Besprühen mit kaltem Wasser schrumpft – wie bereits erwähnt – die Felge des Rades 1 auf den Formgeber 3 und 4 auf, wodurch sich ein genauer Durchmesser der Felge ergibt. Innerhalb von 10 Sekunden wird dabei die Temperatur des Rades von 550 °C auf Raumtemperatur gesenkt. Der Wasserzufluss wird dann abgestellt. Die beheizten Formgeber 3 und 4 geben dann Wärme an die Felge ab, welche sich wieder ausdehnt. Nach 20 Sekunden ist das Rad 1 lose und kann von den Formgebern 3 und 4 entfernt werden.

Wegen der hervorragenden Wärmeleitfähigkeit des Aluminiums ist es möglich, die Felge auf eine Temperatur zu kühlen, welche etwa der des Kühlmittels entspricht. Dadurch, dass die Formgeber 3 und 4 auf einer etwas höheren Temperatur – auch nach Beendigung des Kühlvorganges – gehalten werden, entsteht nach dem Abkühlen des Werkstücks ein Wärmefluss von den Formgebern 3 und 4 zu dem Werkstück, welcher eine geringfügige Ausdehnung zur Folge hat. Der Anstieg der Temperatur im Rad 1, welcher durch die Heizung der Formgeber 3 und 4 verursacht ist, muss mindestens so gross sein, dass sich eine thermische Ausdehnung des Rades 1 ergibt, welche der durch die Schrumpfung entstandenen Spannung entspricht. In der Praxis erfordert dieses einen Temperaturanstieg von 50 bis 60 °C. Das Werkstück wird dann ausreichend ausgedehnt, um ohne zusätzliche Kräfte von den Formgebern 3 und 4 entfernt werden zu können. Auf diese Art und Weise ist die ausgerichtete Form ungestört durch äussere Einflüsse erhalten geblieben. Es ist wichtig, dass die Formgeber 3 und 4 eine gleichmässige Temperatur behalten, um eine Herstellungsgleichmässigkeit von Rad zu Rad zu gewährleisten.

### Patentanspruch

Verfahren zum Ausrichten der Felge eines Aluminiumrades, bei dem die Felge auf einen oder mehrere Formgeber aufgebracht wird, dadurch gekennzeichnet, dass der oder die Formgeber (3 bzw. 4) auf eine Temperatur unterhalb der des Lösungsglühens beheizt ist/sind, das Aluminiumrad (1) noch aus der Hitze des Lösungsglühens auf den oder die Formgeber (3 bzw. 4) gebracht und durch ein Kühlmittel auf eine Temperatur unterhalb der des oder der Formgeber(s) (3 bzw. 4) abgekühlt wird, wobei die Felge des Aluminiumrades (1) fest auf den oder die Formgeber (3 bzw. 4) aufschrumpft und dabei ausgerichtet wird, wonach die Zufuhr des Kühlmittels unterbrochen wird, so dass die Felge des Aluminiumrades (1) durch den oder die Formgeber (3 bzw. 4) wieder aufgeheizt wird, sich dabei ausdehnt und so leicht von dem oder den Formgeber(n) (3 bzw. 4) abgenommen werden kann.

### Claim

Process for adusting the rim of an aluminium wheel in which the rim is placed on one or more blanking tools, characterized in that the blanking tool(s) (3 or 4) is/are heated to a temperature below the one of solution annealing, the aluminium wheel (1) is placed, still having the temperature of solution annealing, on the blanking tool(s) (3 or 4) and is cooled by a coolant to a temperature below the one of the blanking tool(s) (3 or 4), the rim of the aluminium wheel (1) being firmly shrinked on the blanking tool(s) (3 or 4) and thus being adjusted, whereupon the coolant feed is interrupted so that the rim of the aluminium wheel (1) is reheated by the blanking tool(s) (3 or 4), thus expanding and being easy to be taken off the blanking tool(s) (3 or 4).

### Revendication

Procédé pour l'ajustage de la jante d'une roue en aluminium, dans lequel la jante est placée sur un ou plusieurs outils de conformation, procédé caractérisé en ce que le ou les outils (3 ou 4) de conformation est/sont chauffé(s) à une température inférieure à celle du recuit de mise en solution, la roue (1) d'aluminium est placée, en étant encore à la température du recuit de mise en solution, sur le ou les outils (3 ou 4) de conformation, et elle est refroidie à une température inférieure à celle de l'outil ou des outils (3 ou 4) de conformation de sorte que la jante de la roue (1) en aluminium se rétrécit en serrant solidement l'outil ou les outils (3 ou 4) de conformation et se trouve ajustée de ce fait, après quoi on interrompt l'alimentation en fluide de refroidissement, de sorte que la jante de la roue (1) d'aluminium se trouve réchauffée par l'outil ou les outils (3 ou 4) de conformation, elle se dilate alors et peut être ainsi retirée facilement de l'outil ou des outils (3 ou 4) de conformation.

0183243

Fig. 1